# EUROPEAN PATENT APPLICATION

(11) **EP 4 737 687 A1**
(43) Date of publication of application: **06.05.2026**
(21) Application number: 25212044.9
(22) Date of filing: 29.10.2025
(51) Int. Cl.: F01D 5/16, F01D 9/04, F01D 5/14

(54) **FAN EXIT GUIDE VANE WITH STRUCTURALLY CAPABLE ACOUSTIC TREATMENT, GAS TURBINE ENGINE AND PROCESS FOR FORMING A FAN EXIT GUIDE VANE WITH STRUCTURALLY CAPABLE ACOUSTIC TREATMENT**

(30) Priority: 31.10.2024 US 202418933344
(71) Applicant: RTX Corporation, Farmington, CT 06032 (US)
(72) Inventor: Yazici, Murat, Glastonbury, 06033 (US); Breault, Andrew E., Bolton, 06043 (US); Morton, Jeffrey T., Glastonbury, 06033 (US)
(74) Representative: Schmitt-Nilson Schraud Waibel Wohlfrom Patentanwälte Partnerschaft mbB

(57) **Abstract**

A fan exit guide vane with structurally capable acoustic treatment includes a leading edge and a trailing edge opposite chordwise from the leading edge; a radially inner attachment region opposite spanwise from a radially outer attachment region; a span dimension extending between the radially inner attachment region and the radially outer attachment region; a chord dimension extending between the leading edge and the trailing edge; a pressure side opposite a suction side of the fan exit guide vane; a structural feature and an acoustic receiver formed within the fan exit guide vane extending at least one of spanwise through the fan exit guide vane between the radially inner attachment region and the radially outer attachment region and/or chordwise between the leading edge and the trailing edge; and an acoustic panel inserted into the acoustic receiver. A gas turbine engine includes the fan exit guide vane with structurally capable acoustic treatment. A process forms the fan exit guide vane with structurally capable acoustic treatment.

## Description

The present disclosure is directed to the improved structurally and acoustically capable fan exit guide vane.

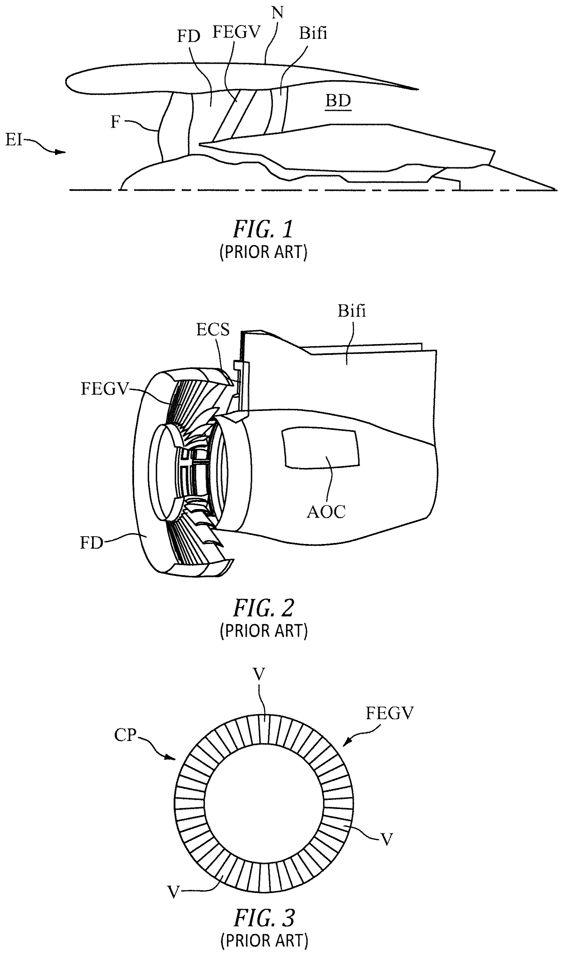

Current gas turbine engine design, as seen in Fig. 1 through Fig. 4a, includes a design with variable or non-variable fan exit guide vanes (FEGV). The fan F is positioned within the fan duct FD proximate the engine inlet EI. The fan exit guide vanes (FEGV) are downstream from the fan F and located forward of the bypass duct BD.

A current FEGV pattern is created to minimize airflow back pressure adverse effect on fan blades F caused by the downstream presence of nacelle N bypass duct BD elements (Fig. 2), such as the upper and lower bifurcation (BiFi), air-to-oil cooler (AOC), and environmental control system inlet (ECS).

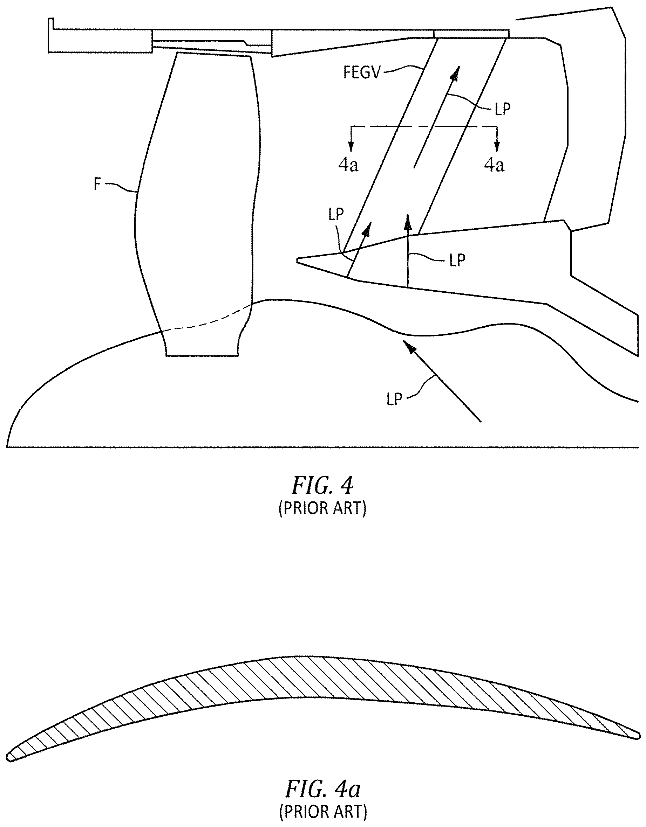

As seen in Fig. 3, the FEGV has a circumferential pattern CP made up of vanes V that can translate the structural load path LP shown as arrows in Fig. 4. All vane types are designed with the same cross sectional monolithic load carrying features (Fig. 4a). Additionally, the FEGV pattern aims to optimize the fan duct performance and acoustic characteristics of the gas turbine engine.

The FEGV pattern is defined to meet structural, performance and acoustic requirements across a wide range of operating conditions. It is therefore not optimized at any single mission condition, like cruise condition or climb condition. Engine noise targets are getting more challenging for future programs. Engine and airframe makers are looking for more opportunities for noise reduction. At the engine side, acoustic treatable areas are limited. Fan exit guide vanes are an area for noise reduction opportunities.

In accordance with the present disclosure, there is provided a fan exit guide vane with structurally capable acoustic treatment comprising a leading edge and a trailing edge opposite chordwise from the leading edge; a radially inner attachment region opposite spanwise from a radially outer attachment region; a span dimension extending between the radially inner attachment region and the radially outer attachment region; a chord dimension extending between the leading edge and the trailing edge; a pressure side opposite a suction side of the fan exit guide vane; a structural feature formed within the fan exit guide vane extending at least one of spanwise through the fan exit guide vane from the radially inner attachment region to the radially outer attachment region and/or chordwise from the leading edge to the trailing edge; an acoustic receiver formed within the structural feature extending at least one of spanwise through the fan exit guide vane between the radially inner attachment region and the radially outer attachment region or chordwise between the leading edge and the trailing edge; and an acoustic panel inserted into the acoustic receiver.

Particular embodiments further may include at least one, or a plurality of, the following optional features, alone or in combination with each other:

A further embodiment of any of the foregoing embodiments may additionally and/or alternatively include the structural feature and the acoustic receiver are formed in the fan exit guide vane at predetermined locations along the span of the fan exit guide vane.

A further embodiment of any of the foregoing embodiments may additionally and/or alternatively include the acoustic panel is located on the pressure side.

A further embodiment of any of the foregoing embodiments may additionally and/or alternatively include the acoustic receiver shape is selected from the group consisting of oval, circle, semicircle, triangle, square, rectangle, parallelogram, rhombus, trapezoid, diamond, pentagon, hexagon, octagon, nonagon, decagon.

A further embodiment of any of the foregoing embodiments may additionally and/or alternatively include the fan exit guide vane with structurally capable acoustic treatment further comprising the acoustic treatment formed within the acoustic receiver, the acoustic treatment configured to dissipate sound energy.

A further embodiment of any of the foregoing embodiments may additionally and/or alternatively include the acoustic panel is configured insertable as a snap fit or friction fit into the acoustic receiver.

A further embodiment of any of the foregoing embodiments may additionally and/or alternatively include the acoustic panel is configured interchangeable to accommodate design changes and/or damage to the acoustic panel.

In accordance with the present disclosure, there is provided a gas turbine engine with a fan exit guide vane with structurally capable acoustic treatment comprising a fan located within a fan duct; an array of fan exit guide vanes supported within the fan duct downstream from the fan, the array of fan exit guide vanes span across the fan duct attached to a radially inner surface of the fan duct and a radially outer surface of the fan duct; each fan exit guide vane of the array of fan exit guide vanes comprising a leading edge and a trailing edge opposite chordwise from the leading edge; a radially inner attachment region opposite spanwise from a radially outer attachment region; a span dimension extending between the radially inner attachment region and the radially outer attachment region; a chord dimension extending between the leading edge and the trailing edge; a pressure side opposite a suction side of the fan exit guide vane; a structural feature formed within the fan exit guide vane extending at least one of spanwise through the fan exit guide vane from the radially inner attachment region to the radially outer attachment region and/or chordwise from the leading edge to the trailing edge; an acoustic receiver formed within the structural feature extending at least one of spanwise through the fan exit guide vane between the radially inner attachment region and the radially outer attachment region or chordwise between the leading edge and the trailing edge; and an acoustic panel inserted into the acoustic receiver.

Particular embodiments further may include at least one, or a plurality of, the following optional features, alone or in combination with each other:

A further embodiment of any of the foregoing embodiments may additionally and/or alternatively include the structural feature and the acoustic receiver are formed in the fan exit guide vane at predetermined locations along the span of the fan exit guide vane.

A further embodiment of any of the foregoing embodiments may additionally and/or alternatively include the gas turbine engine with the fan exit guide vane with structurally capable acoustic treatment further comprising the acoustic treatment formed within the acoustic panel, the acoustic treatment configured to dissipate sound energy.

A further embodiment of any of the foregoing embodiments may additionally and/or alternatively include the acoustic receiver is located on the pressure side.

A further embodiment of any of the foregoing embodiments may additionally and/or alternatively include the acoustic panel is located on the suction side.

A further embodiment of any of the foregoing embodiments may additionally and/or alternatively include the gas turbine engine with the fan exit guide vane with structurally capable acoustic treatment further comprising a surface skin in operative communication with the acoustic treatment.

In accordance with the present disclosure, there is provided a process for forming fan exit guide vane with structurally capable acoustic treatment comprising locating a fan within a fan duct; supporting an array of fan exit guide vanes within the fan duct downstream from the fan; attaching the array of fan exit guide vanes spanned across the fan duct to a radially inner surface of the fan duct and a radially outer surface of the fan duct by; coupling a radially inner attachment region of a fan exit guide vane of the array of fan exit guide vanes in operative communication with a radially inner surface of the fan duct; coupling a radially outer attachment region of the fan exit guide vane in operative communication with the radially outer surface of the fan duct; forming a structural feature within the fan exit guide vane extending at least one of spanwise through the fan exit guide vane between the radially inner attachment region and the radially outer attachment region and/or chordwise between a leading edge and a trailing edge; forming an acoustic receiver within the fan exit guide vane extending at least one of spanwise through the fan exit guide vane between the radially inner attachment region and the radially outer attachment region or chordwise between the leading edge and the trailing edge; and inserting an acoustic panel into the acoustic receiver.

Particular embodiments further may include at least one, or a plurality of, the following optional features, alone or in combination with each other:

A further embodiment of any of the foregoing embodiments may additionally and/or alternatively include the process further comprising forming the acoustic receiver in the fan exit guide vane at predetermined locations along the span of the fan exit guide vane.

A further embodiment of any of the foregoing embodiments may additionally and/or alternatively include the process further comprising forming the acoustic treatment within the acoustic panel; and configuring the acoustic treatment to dissipate sound energy.

A further embodiment of any of the foregoing embodiments may additionally and/or alternatively include the process further comprising locating the acoustic receiver on the pressure side.

A further embodiment of any of the foregoing embodiments may additionally and/or alternatively include the process further comprising configuring the acoustic panel insertable as a snap fit or friction fit into the acoustic panel receiver.

A further embodiment of any of the foregoing embodiments may additionally and/or alternatively include the process further comprising configuring the acoustic panel and a surface skin as a combination panel interchangeable to accommodate design changes and/or damage.

A further embodiment of any of the foregoing embodiments may additionally and/or alternatively include the process further comprising shaping the acoustic panel to influence acoustic dampening capability in the proximity of the fan exit guide vane.

Other details of the structurally and acoustically capable fan exit guide vane are set forth in the following detailed description and the accompanying drawings wherein like reference numerals depict like elements.
Fig. 1 is a schematic representation of a prior art gas turbine engine.
Fig. 2 is a schematic representation of a prior art gas turbine engine.
Fig. 3 is a schematic representation of a prior art fan exit guide vane pattern.
Fig. 4 is a schematic representation of a prior art fan exit guide vane with load path.
Fig. 4A is a sectional view schematic representation of the prior art fan exit guide vane Fig. 4.
Fig. 5 is a schematic representation of an exemplary fan exit guide vane with structurally capable acoustic treatment.
Fig. 5a is a sectional view of schematic representation of the exemplary fan exit guide vane with structurally capable acoustic treatment.
Fig. 6 is a schematic representation of exemplary fan exit guide vane with structurally capable acoustic treatment shown as a two-dimensional shape.
Fig. 7 is a schematic representation of exemplary fan exit guide vane with structurally capable acoustic treatment shown as three-dimensional shapes.
Fig. 8 is a schematic representation of exemplary acoustic treatment formed as acoustic panels.
Fig. 9 is a schematic representation of exemplary combination panel for installing acoustic treatment to a fan exit guide vane creating a structurally capable acoustically treated fan exit guide vane.
Fig. 10 a schematic representation of exemplary fan exit guide vane with structurally capable acoustic treatment and a surface skin.

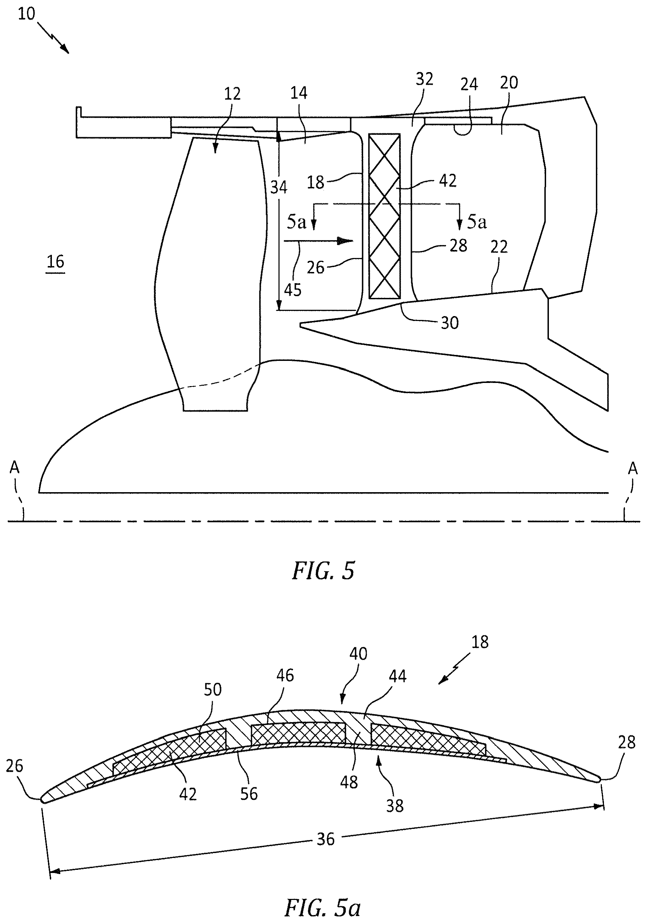

Referring now to Fig. 5 showing a schematic of a gas turbine engine 10. The gas turbine engine 10 includes a fan 12 with fan blades within a fan duct 14 proximate an engine inlet 16. Downstream from the fan 12 is a fan exit guide vane 18 upstream from a bypass duct 20.

The fan exit guide vane 18 spans across the fan duct 14 attached to a radially inner surface 22 of the fan duct 14 and a radially outer surface 24 of the fan duct 14.

With reference also to Fig. 5a, the fan exit guide vane 18 includes a leading edge 26 and a trailing edge 28 opposite chordwise from the leading edge 26.

The fan exit guide vane 18 includes a radially inner attachment region 30 proximate the radially inner surface 22. The fan exit guide vane 18 includes a radially outer attachment region 32 proximate the radially outer surface 24. The radially inner attachment region 30 is opposite spanwise from the radially outer attachment region 32. The radially inner attachment region 30 of the fan exit guide vane 18 attaches to the fan duct 14 at the radially inner surface 22. The radially outer attachment region 32 of the fan exit guide vane 18 attaches to the fan duct 14 at the radially outer surface 24.

The fan exit guide vane 18 includes a span 34 dimension extending between the radially inner attachment region 30 and the radially outer attachment region 32. The fan exit guide vane 18 includes a chord dimension 36 extending between the leading edge 26 and the trailing edge 28, as seen in Fig 5a. The fan exit guide vane 18 includes a pressure side 38 opposite a suction side 40.

The fan exit guide vane 18 shown in Fig 5 is oriented generally vertical, that is along a similar radial span between the radially inner surface 22 and radially outer surface 24 relative to the axis A. Alternatively, the fan exit guide vane 18 can include a canted orientation. In an exemplary embodiment, the vane stacking axis can be canted aft, that is the radially inner attachment region 30 is forward of the radially outer attachment region 32.

The fan exit guide vane 18 can include an acoustic treatment 42. The acoustic treatment 42 can be any material or structure configured to dissipate sound energy. The acoustic treatment 42 can include various materials and/or structures with sound-absorbing and diffusing properties. In an exemplary embodiment the acoustic treatment 42 can provide a broadband noise benefit of from about 0.5 to 2 EPNdB. The acoustic treatment 42 can be varied from one fan exit guide vane 18 to another. The variation can be by varying the materials, the shape and the location of the acoustic treatment 42, as further described as follows. The materials of the acoustic treatment 42 can include, but are not limited to composites, metals, plastics, foams, and the like. The acoustic treatment is porous and/or shaped in a form that includes a plurality of cavities with a high surface area to fill ratio (e.g., many nooks and crannies) to enable the acoustic energy to enter and dissipate within. That is, the acoustic panel can be shaped to influence the acoustic dampening capability thereof. For example, the material may include a honeycomb structure, which enables significant acoustic dampening.

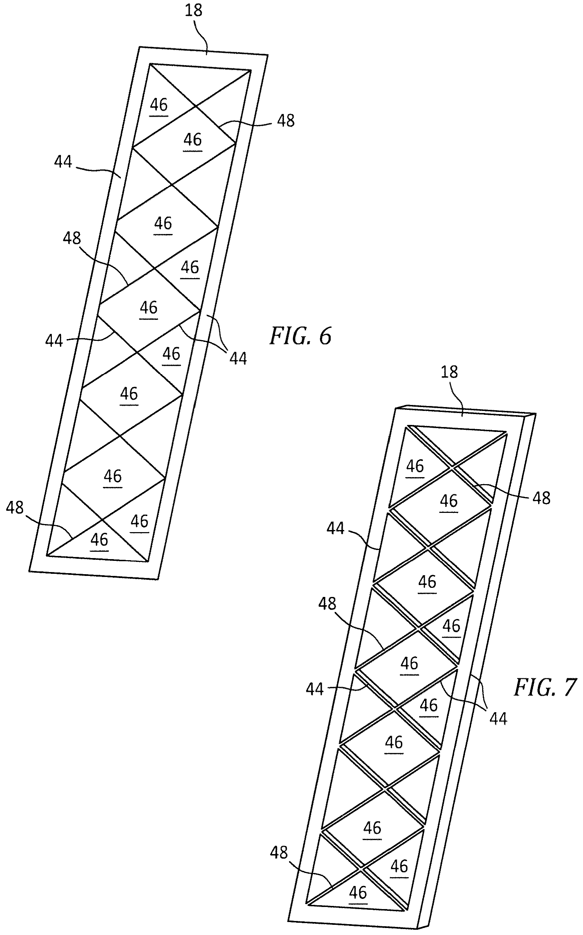

Referring also to Fig. 5a to Fig. 10, the fan exit guide vane 18 can include structural features 44 configured to provide structural capabilities for various loads the fan exit guide vane 18 experiences within the gas turbine engine 10. The structural loads can include vertical loads, axial loads, torque loads and the like. The structural features 44 can be formed within the fan exit guide vane 18 as seen in Fig. 6 as a two-dimensional shape as well as in Fig. 7 shown as three-dimensional shapes. The structural features 44 can extend along the span dimension 34 and/or chord dimension 36 of the fan exit guide vane 18.

The structural features 44 can provide the structural load characteristics needed to support the components within the gas turbine engine 10 and to bolster the fan exit guide vane 18 structure. The structural features 44 help to complete the load path LP of the gas turbine engine 10 for the fan exit guide vane 18. The structural features 44 can support a load along the span dimension 34 of the fan exit guide vane 18 between the radially inner surface 22 and radially outer surface 24. The fan exit guide vane 18 maintains the aerodynamic loads presented within the fan duct 14. The aerodynamic loads are created by the fan exhaust 45 flowing over the pressure side 38 and suction side 40 and other surfaces of the fan exit guide vane 18, as seen in Fig 5.

The structural features 44 can be configured to create acoustic pockets or acoustic receivers 46 for depositing the acoustic treatment 42. The acoustic receivers 46 can be formed into any variety of shapes that can provide a location to situate the acoustic treatment 42 as well as allow the structural features 44 that define their perimeter to provide structural utility. The acoustic receivers 46 can be formed from ribs 48 that bound the pockets (e.g., acoustic receivers 46 as pockets)and/or other portions of the fan exit guide vane 18 such as the radially inner attachment region 30, radially outer attachment region 32, leading edge 26 and trailing edge 28. The acoustic receiver 46 can be formed on the pressure side and/or the suction side of the fan exit guide vane 18.

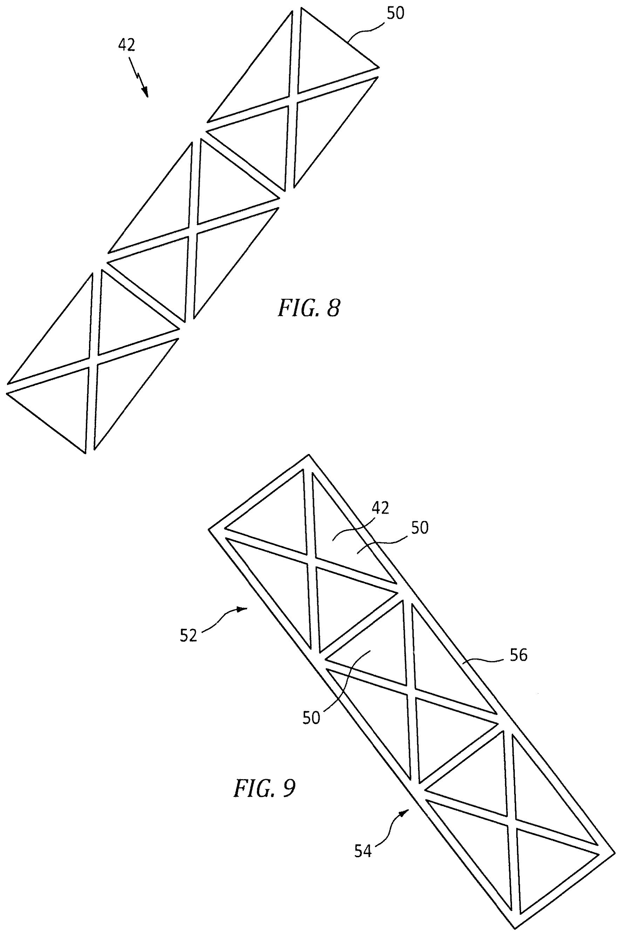

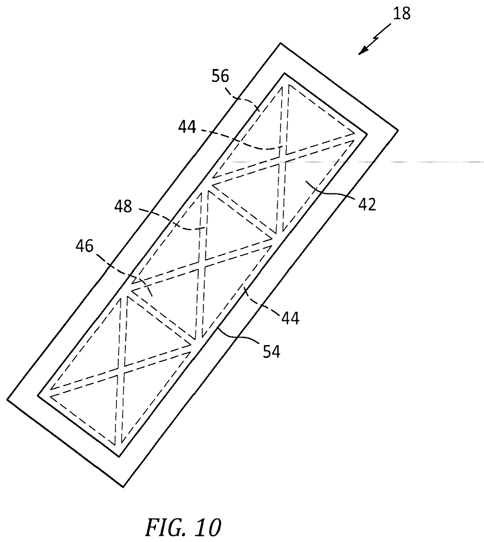

As seen in Fig. 8, the acoustic treatment 42 can be formed as acoustic panels 50 having the cross-section shape configured to be inserted into acoustic receivers 46 as individual panels, as seen in Fig. 10. The acoustic receivers 46 can have a cross-sectional shape that allows for securing the acoustic panels 50 as well as allowing for insertion of the acoustic panels 50 into the acoustic receivers 46. The acoustic receivers 46 can have virtually any shape, such as oval, circle, semicircle, triangle, square, rectangle, parallelogram, rhombus, trapezoid, diamond, pentagon, hexagon, octagon, nonagon, decagon, and the like. The acoustic receivers 46 can be formed in the fan exit guide vane 18 at predetermined locations along the span 34 of the fan exit guide vane 18 as seen in Fig. 6.

The acoustic panels 50 can be configured to be inserted into the acoustic receivers 46. The acoustic panels 50 can be disposed into and/or can be configured to be connected with clips, an adhesive and/or insertable as a snap fit or friction fit into the acoustic receivers 46. The locations of the acoustic receivers 46 can be located dependent on the design of the fan exit guide vane 18 final count/aero design, acoustic and attachment structural requirements.

In an exemplary embodiment as seen in Fig. 9, the acoustic treatment 42 can be formed in operative communication with a surface skin 56 to be included in a combination panel 52. The combination panel 52 can have both the acoustic treatment 42 and the surface skin 56 in combination, consisting of the skin 56 with the series of acoustic panels 50 pre adhered. The combination panel 52 can be coupled in operative communication with the fan exit guide vane 18 as a one piece insert 54 that can provide the sound energy dissipation function. The surface skin 56 can attach when the skin is applied to the fan exit guide vane 18, each acoustic receiver 46 receives a corresponding acoustic panel 50 in a single operation and the adhering of the skin 56 to the fan exit guide vane 18 would in turn secure the acoustic panels 50 to the assembly. The skin 56 with acoustic panels 50 attached engages with the structural features 44/ribs 48 that are included on the fan exit guide vane 18.

The acoustic panels 50 can be interchangeable, replaceable, serviceable, or removable to accommodate design changes and/or damage to the acoustic panels 50. The acoustic panels 50 can be shaped to influence the acoustic capability in the proximity of the fan exit guide vane 18. Multiple configurations of acoustic panels 50 can be utilized to interface with multiple configurations of acoustic receivers 46 included in a specific fan exit guide vane 18 design.

The surface skin 56 as seen in Fig. 10 can be in operative communication with the structural feature 44 and the acoustic treatment 42. The surface skin 56 can be applied over the ribs 48 configured for aerodynamic benefit to the fan exit guide vane 18, as shown in Fig. 5a. The surface skin 56 can allow the sound energy to pass through and penetrate the acoustic treatment 42. The pressure side 38 and/or suction side 40 of the fan exit guide vane 18 may be configured with a recess to receive the surface skin 56 such that once the surface skin 56 is installed and secured the perimeter interface between the surface skin 56 and fan exit guide vane 18 is aerodynamically friendly without steps or gaps.

A technical advantage of the disclosed exemplary fan exit guide vane with structurally capable acoustic treatment includes a capacity to dampen acoustic noise along the surfaces of fan exit guide vanes.

Another technical advantage of the disclosed exemplary fan exit guide vane with structurally capable acoustic treatment includes structural features formed in the fan exit guide vanes configured to receive acoustic panels.

Another technical advantage of the disclosed exemplary fan exit guide vane with structurally capable acoustic treatment includes replaceable panels with acoustic treatment.

Another technical advantage of the disclosed exemplary fan exit guide vane with structurally capable acoustic treatment includes patterns of acoustic panels attached to fan exit guide vanes enabling both aero and structural function.

Another technical advantage of the disclosed exemplary fan exit guide vane with structurally capable acoustic treatment includes a capacity to maintain a minimum thickness of the airfoil shape.

Another technical advantage of the disclosed exemplary fan exit guide vane with structurally capable acoustic treatment includes a modularity for manufacturability.

Another technical advantage of the disclosed exemplary fan exit guide vane with structurally capable acoustic treatment includes a reduction in fan aero blockage.

There has been provided fan exit guide vane with structurally capable acoustic treatment. While the fan exit guide vane with structurally capable acoustic treatment has been described in the context of specific embodiments thereof, other unforeseen alternatives, modifications, and variations may become apparent to those skilled in the art having read the foregoing description. Accordingly, it is intended to embrace those alternatives, modifications, and variations which fall within the broad scope of the appended claims.

## Claims

1. A fan exit guide vane with structurally capable acoustic treatment comprising:
a leading edge and a trailing edge opposite chordwise from the leading edge; a radially inner attachment region opposite spanwise from a radially outer attachment region; a span dimension extending between the radially inner attachment region and the radially outer attachment region; a chord dimension extending between the leading edge and the trailing edge; a pressure side opposite a suction side of the fan exit guide vane;
a structural feature formed within the fan exit guide vane extending at least one of spanwise through the fan exit guide vane between the radially inner attachment region and the radially outer attachment region and/or chordwise between the leading edge and the trailing edge;
an acoustic receiver formed within the structural feature extending at least one of spanwise through the fan exit guide vane between the radially inner attachment region and the radially outer attachment region or chordwise between the leading edge and the trailing edge; and
an acoustic panel inserted into the acoustic receiver.

2. The fan exit guide vane with structurally capable acoustic treatment according to claim 1, wherein the structural feature and the acoustic receiver are formed in the fan exit guide vane at predetermined locations along the span of the fan exit guide vane.

3. The fan exit guide vane with structurally capable acoustic treatment according to claim 1 or 2, wherein the acoustic panel is located on the pressure side.

4. The fan exit guide vane with structurally capable acoustic treatment according to any of claims 1 to 3, wherein the acoustic receiver shape is selected from the group consisting of oval, circle, semicircle, triangle, square, rectangle, parallelogram, rhombus, trapezoid, diamond, pentagon, hexagon, octagon, nonagon, decagon.

5. The fan exit guide vane with structurally capable acoustic treatment according to any of claims 1 to 4, further comprising:
the acoustic treatment formed within the acoustic receiver, the acoustic treatment configured to dissipate sound energy.

6. The fan exit guide vane with structurally capable acoustic treatment according to any of claims 1 to 5, wherein the acoustic panel is configured insertable as a snap fit or friction fit into the acoustic receiver.

7. The fan exit guide vane with structurally capable acoustic treatment according to any of claims 1 to 6, wherein the acoustic panel is configured interchangeable to accommodate design changes and/or damage to the acoustic panel.

8. The fan exit guide vane with structurally capable acoustic treatment according to any of claims 1 to 7, wherein the acoustic panel is located on the suction side.

9. The gas turbine engine with the fan exit guide vane with structurally capable acoustic treatment according to any of claims 1 to 8, further comprising:
a surface skin in operative communication with the acoustic treatment.

10. A gas turbine engine with a fan exit guide vane with structurally capable acoustic treatment comprising:
a fan located within a fan duct; and
an array of fan exit guide vanes supported within the fan duct downstream from the fan, the array of fan exit guide vanes span across the fan duct attached to a radially inner surface of the fan duct and a radially outer surface of the fan duct; each fan exit guide vane of the array of fan exit guide vanes having the configuration of the fan exit guide vane with structurally capable acoustic treatment according to any of claims 1 to 9.

11. A process for forming a fan exit guide vane with structurally capable acoustic treatment comprising:
locating a fan within a fan duct;
supporting an array of fan exit guide vanes within the fan duct downstream from the fan;
attaching the array of fan exit guide vanes spanned across the fan duct to a radially inner surface of the fan duct and a radially outer surface of the fan duct by;
coupling a radially inner attachment region of a fan exit guide vane of the array of fan exit guide vanes in operative communication with a radially inner surface of the fan duct;
coupling a radially outer attachment region of the fan exit guide vane in operative communication with the radially outer surface of the fan duct;
forming a structural feature within the fan exit guide vane extending at least one of spanwise through the fan exit guide vane between the radially inner attachment region and the radially outer attachment region and/or chordwise between a leading edge and a trailing edge;
forming an acoustic receiver within the fan exit guide vane extending at least one of spanwise through the fan exit guide vane between the radially inner attachment region and the radially outer attachment region or chordwise between the leading edge and the trailing edge; and
inserting an acoustic panel into the acoustic receiver.

12. The process according to claim 11, further comprising:
forming the acoustic receiver in the fan exit guide vane at a predetermined location along a span of the fan exit guide vane; and/or
further comprising:
forming the acoustic treatment within the acoustic panel; and
configuring the acoustic treatment to dissipate sound energy.

13. The process according to claim 11 or 12, further comprising:
locating the acoustic receiver on the pressure side; and/or
further comprising:
configuring the acoustic panel insertable as a snap fit or friction fit into the acoustic panel receiver.

14. The process according to any of claims 11 to 13, further comprising:
configuring the acoustic panel and a surface skin as a combination panel interchangeable to accommodate design changes and/or damage.

15. The process according to any of claims 11 to 14, further comprising:
shaping the acoustic panel to influence acoustic dampening capability in the proximity of the fan exit guide vane.
